# EUROPÄISCHE PATENTSCHRIFT

(11) **EP 0 421 500 B1**
(45) Veröffentlichungstag und Bekanntmachung des Hinweises auf die Patenterteilung: **27.07.1994**
(21) Anmeldenummer: 90202103.9
(22) Anmeldetag: 02.08.1990
(51) Int. Cl.: C01B 17/04, B01D 53/36, B01J 23/74

(54) **Verfahren zum Entschwefeln eines Schwefelwasserstoff enthaltenden Gases**
Process for the desulfurization of a hydrogen sulfide containing gas
Procédé de désulfuration d'un gaz contenant du sulfure d'hydrogène

(30) Priorität: 02.08.1989 DE 3925574
(43) Veröffentlichungstag der Anmeldung: 10.04.1991
(73) Patentinhaber: METALLGESELLSCHAFT Aktiengesellschaft, 60015 Frankfurt (DE)
(72) Erfinder: Ruhl, Emil, Dr., D-6000 Frankfurt am Main (DE); Lell, Rainer, D-6369 Nidderau 5 (DE)

(56) Entgegenhaltungen:
- EP-A- 0 215 317
- EP-A- 0 218 302
- WO-A-87/02653
- OIL AND GAS JOURNAL. vol. 85, no. 32, 10 August 1987, TULSA US Seiten 65 - 70; J.Nougayrede et al.: "Commercial runs show TiO2 Claus catalyst retains activity."

## Beschreibung

Die Erfindung betrifft ein Verfahren zum Entschwefeln eines Gases, das H₂S, SO₂ und mindestens eine der Kohlenstoffverbindungen COS und CS₂ enthält, wobei die Summe des Gehalts an COS und CS₂ das 0,01- bis 0,5-fache des H₂S-Gehalts beträgt, durch Hydrolyse von COS und CS₂ zu H₂S und CO₂ an einem zu mindestens 80 Gew.-% aus TiO₂ bestehenden Katalysator und durch katalytisches Umsetzen von H₂S mit SO₂ und/oder O₂ zu H₂O und Elementarschwefel.

TiO₂-Katalysatoren dieser Art und ihre Verwendung beim Entschwefeln H₂S-haltiger Gase sind in den deutschen Offenlegungsschriften 35 29 665 und 35 35 815 beschrieben. Beim Verfahren der DE-A-35 29 665 arbeitet man bei relativ niedrigen Temperaturen im Bereich von 30 bis 150°C. Diese Temperaturen liegen unter dem Taupunkt des Schwefels, so daß sich während des Betriebs Elementarschwefel auf dem TiO₂-Katalysator abscheidet. Dies macht ein relativ häufiges Regenerieren des Katalysators erforderlich. Nachteilig ist auch, daß bei einem Sauerstoffgehalt im zu entschwefelnden Gas ein merkbarer Rückgang des Umsatzes eintritt.

Im bekannten Verfahren der DE-A-35 35 815 wird ein zu mindestens 90 Gew.-% aus TiO₂ bestehender Katalysator bei Temperaturen von 200 bis 350°C eingesetzt, um in einer der Entschwefelung vorgeschalteten Katalysestufe COS und CS₂ mit Wasser zu H₂S und CO₂ zu hydrolysieren. Die Bildung von Elementarschwefel durch gleichzeitiges Umsetzen von H₂S und SO₂ ist hierbei so gering, daß sie nicht ins Gewicht fällt.

Der Erfindung liegt die Aufgabe zugrunde, beim eingangs genannten Verfahren den TiO₂-Katalysator sowohl zur Hydrolyse von COS und CS₂ wie auch zur Bildung von Elementarschwefel zu nutzen und gleichzeitig eine lange Standzeit des Katalysators zu erreichen. Erfindungsgemäß gelingt dies dadurch, daß man das zu entschwefelnde Gas in einem ersten Reaktor bei Temperaturen von 160 bis 190°C durch ein Katalysatorbett leitet, das nur den zu mindestens 80 Gew.-% aus TiO₂ bestehenden Katalysator enthält, daß man aus dem Katalysatorbett ein behandeltes Gas abzieht, das Elementarschwefel enthält, dessen Gehalt an H₂S höchstens das 0,5-fache des H₂S-Gehalts im zu entschwefelnden Gas und dessen Gehalt an den Kohlenstoffverbindungen COS und CS₂ höchstens das 0,1-fache des Gehalts an diesen Kohlenstoffverbindungen im zu entschwefelnden Gas beträgt, daß man das behandelte Gas kühlt, Elementarschwefel auskondensiert und abtrennt, daß man das von auskondensiertem Elementarschwefel befreite Gas durch einen zweiten Reaktor leitet, in welchem man an einem Katalysator bei Temperaturen im Bereich von 110 bis 160°C H₂S und SO₂ zu Elementarschwefel umsetzt und den Elementarschwefel am Katalysator weitgehend adsorbiert.

Für das erfindungsgemäße Verfahren ist es wichtig, daß man sowohl COS und CS₂ hydrolysiert, H₂S und SO₂ zu Elementarschwefel umsetzt und gleichzeitig einen Teil des H₂S zu SO₂ und/oder Elementarschwefel oxidiert.

Der für das erfindungsgemäße Verfahren im ersten Reaktor wichtige Temperaturbereich von 160 bis 190°C bedeutet ein Arbeiten oberhalb des Schwefeltaupunkts und unterhalb des für die Hydrolyse von COS und CS₂ optimalen Arbeitsbereichs. Dennoch wird im ersten Reaktor ein genügender Umsatz erreicht, so daß im zweiten Reaktor die restliche Umsetzung ohne Schwierigkeiten erfolgen kann. Gefunden wurde auch, daß ein Sauerstoffgehalt im zu entschwefelnden Gas nicht von Nachteil ist, weil man dadurch mit dem Sauerstoffzusatz im ersten Reaktor einen Teil des H₂S zu SO₂ oxidieren kann. Auf diese Weise lassen sich im ersten Reaktor möglichst stöchiometrische Verhältnisse für die Umsetzung von

2H₂S + SO₂ → 3S + 2H₂O

erreichen.

Im zweiten Reaktor, in welchem die Entschwefelung bei Temperaturen im Bereich von 110 bis 160°C fortgesetzt wird, kann man ebenfalls den im ersten Reaktor verwendeten TiO₂-Katalysator einsetzen. Bevorzugt benutzt man im zweiten Reaktor aber einen zu mindestens 90 Gew.-% aus Al₂O₃ bestehenden Katalysator, weil hier die Hydrolyse von COS und CS₂ nicht mehr in erheblichem Maß notwendig ist. Der Al₂O₃-Katalysator ist bekannt und z.B. in den beiden oben genannten deutschen Offenlegungsschriften beschrieben.

Der im ersten Reaktor zu verwendende Katalysator besteht zu mindestens 80 Gew.-% und vorzugsweise mindestens 85 Gew.-% aus TiO₂ und weist eine spezifische Oberfläche nach BET von mindestens 50 m²/g auf. In bevorzugter Weise besitzt der Katalysator eine Imprägnierung von 0,3 bis 5 Gew.-%, die mindestens eines der Metalle Nickel, Eisen oder Kobalt enthält. Der Katalysator kann z.B. auf folgendem Weg hergestellt werden:
Formkörper aus TiO₂ werden mit einer wäßrigen Lösung eines oder mehrerer geeigneter Salze, z.B. Sulfate der Imprägnierungsmetalle, wie Nickelsulfat, getränkt, bei etwa 150°C getrocknet und bei etwa 350°C im Luftstrom kalziniert. Prinzipiell auf die gleiche Weise kann ein imprägnierter Al₂O₃-Katalysator hergestellt werden, dessen Imprägnierung ebenfalls 0,5 bis 3 Gew.-% betragen kann.

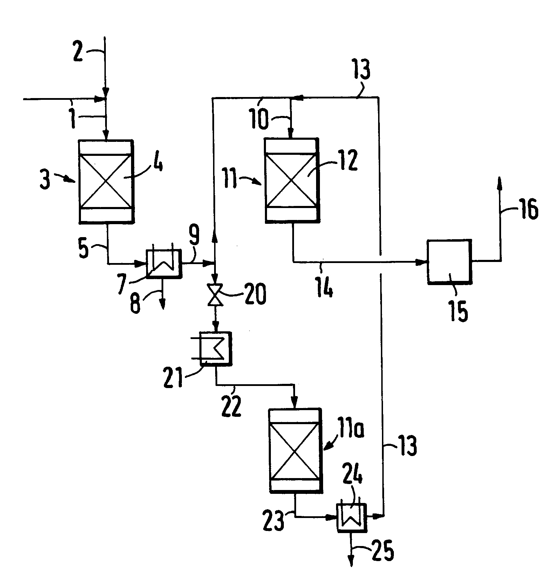

Weitere Einzelheiten des Verfahrens werden mit Hilfe der Zeichnung erläutert, die ein Fließschema des Verfahrens zeigt.

In der Leitung (1) wird das zu entschwefelnde Gas herangeführt, das H₂S, SO₂ und mindestens eine der Kohlenstoffverbindungen COS und CS₂ enthält. Sauerstoff oder Luft wird in dosierter Menge in der Leitung (2) zugesetzt, um das Molverhältnis H₂S zu SO₂ auf den gewünschten Wert von 2 : 1 einzustellen. Im ersten Reaktor (3) wird das Gas durch ein Bett (4) aus dem bereits beschriebenen TiO₂-Katalysator geführt, wobei man Temperaturen im Bett von 160 bis 190°C einhält. Dadurch vermeidet man einen Schwefelbelag auf dem Katalysator, weil man über dem Taupunkt des Schwefels arbeitet. Das in der Leitung (5) den ersten Reaktor (3) verlassende Gas enthält dampfförmigen Elementarschwefel sowie Reste von H₂S und SO₂, es ist praktisch frei von COS, CS₂ und Sauerstoff.

Im Kondensator (7) wird das Gas gekühlt, damit Elementarschwefel auskondensiert und durch die Leitung (8) abgezogen werden kann. Zur weiteren Entschwefelung wird das Gas durch die Leitungen (9) und (10) einem zweiten Reaktor (11) zugeführt, der ein Bett (12) eines Al₂O₃- oder TiO₂-Katalysators enthält. Über die Leitung (13) führt man dem Reaktor (11) auch Regenerationsabgas zu. Im Reaktor (11) arbeitet man bei Temperaturen von 110 bis 160°C, die unter dem Taupunkt des Schwefels liegen. Dadurch belädt sich der Katalysator (12) immer mehr mit Elementarschwefel. Das in der Leitung (14) abgezogene entschwefelte Gas kann z.B. noch durch eine Nachverbrennung (15) geführt werden, bevor man es über den Kamin (16) in die Atmosphäre leitet.

Während der Reaktor (11) in den Entschwefelungsbetrieb geschaltet ist, wird der Katalysator eines baugleichen Reaktors (11a) regeneriert. Man verwendet hierzu einen Teilstrom des Gases der Leitung (9), den man über das Ventil (20) zunächst durch den Erhitzer (21) leitet, den es mit Temperaturen von etwa 250 bis 400°C in der Leitung (22) verläßt. Durch dieses erhitzte Gas verdampft man den Elementarschwefel im Bett des Reaktors (11a) und führt ihn durch die Leitung (23) zu einem Kondensator (24), in welchem der Schwefel kondensiert und flüssig in der Leitung (25) abgezogen wird. Das verbleibende Gas gibt man in der Leitung (13) dem Reaktor (11) auf.

Wenn der Katalysator im Reaktor (11a) regeneriert ist, kann er zum Entschwefeln anstelle des Reaktors (11) verwendet werden. Die für diese Umschaltung nötigen Leitungen und Ventile sind bekannt und wurden der besseren Übersichtlichkeit wegen in der Zeichnung weggelassen.

### Beispiel

Ein zu entschwefelndes Abgas kommt mit einer Menge von 35 000 Nm³/h aus einer Clausanlage und weist folgende Zusammensetzung auf:

| | |
|---|---|
| H₂S | 0,57 Vol.-% |
| SO₂ | 0,23 Vol.-% |
| H₂O | 34,93 Vol.-% |
| H₂ | 4,42 Vol.-% |
| N₂ | 59,73 Vol.-% |
| CO | 0,01 Vol.-% |
| CO₂ | 0,02 Vol.-% |
| COS | 0,05 Vol.-% |
| CS₂ | 0,04 Vol.-% |

Dieses Abgas wird in der Leitung (1) herangeführt und in einer der Zeichnung entsprechenden Verfahrensführung weiterbehandelt. Das Abgas, das eine Temperatur von 167°C aufweist, wird mit 42 Nm³/h Sauerstoff in Form von Luft aus der Leitung (2) gemischt. Der Reaktor (3) enthält einen Katalysator aus aktiviertem Titandioxid mit einer Imprägnierung von 2 Gew.-% Nickel. Im Reaktor erhöht sich die Temperatur durch die Reaktionswärme der schwefelbildenden Reaktionen auf 186°C. Das den Reaktor (3) verlassende Gas enthält noch

| | |
|---|---|
| H₂S | 2500 ppm |
| SO₂ | 1250 ppm |
| COS | 25 ppm |
| CS₂ | 40 ppm |

Das Gas wird im Kondensator (7) auf 130°C abgekühlt, wobei pro Stunde 275 kg Elementarschwefel kondensieren, die man über die Leitung (8) abzieht. 14 000 Nm³/h gekühltes Gas werden über die Leitung (9) und das Ventil (20) zum Erhitzer (21) geführt, wo die Temperatur durch indirekte Erwärmung mit Rauchgas aus der Nachverbrennung (15) auf 300°C angehoben wird. Das restliche Gas, 21 000 Nm³/h, wird direkt über die Leitungen (9) und (10) dem Reaktor (11) aufgegeben. Dieser Reaktor enthält ebenso wie der Reaktor (11a) einen Katalysator, der aus 93 Gew.-% aktiviertem Aluminiumoxid, 3 Gew.-% Fe und 1 Gew.-% Nickel besteht, wobei die Fe- und Ni-Imprägnierung in Form von Sulfaten aufgebracht wurde.

Die Regeneration des Reaktors (11a) ergibt eine mittlere Schwefelproduktion von 175 kg/h, die man in der Leitung (25) abführt. Das Gas in der Leitung (13) weist eine Temperatur von 130°C auf und wird zusammen mit dem Gas der Leitung (10) durch den Reaktor (11) geführt. Das den Reaktor (11) verlassende Gas enthält noch

| | |
|---|---|
| H₂S | 540 ppm |
| SO₂ | 270 ppm |
| COS | 25 ppm |
| CS₂ | 40 ppm |

Dieses Gas führt man mit einer Temperatur von 134°C der Nachverbrennung (15) zu.

## Patentansprüche

1. Verfahren zum Entschwefeln eines Gases, das H₂S, SO₂ und mindestens eine der Kohlenstoffverbindungen COS und CS₂ enthält, wobei die Summe des Gehalts an COS und CS₂ das 0,01- bis 0,5-fache des H₂S-Gehalts beträgt, durch Hydrolyse von COS und CS₂ zu H₂S und CO₂ an einem zu mindestens 80 Gew.-% aus TiO₂ bestehenden Katalysator und durch katalytisches Umsetzen von H₂S mit SO₂ und/oder O₂ zu H₂O und Elementarschwefel, dadurch gekennzeichnet, daß man das zu entschwefelnde Gas in einem ersten Reaktor bei Temperaturen von 160 bis 190°C durch ein Katalysatorbett leitet, das nur den zu mindestens 80 Gew.-% aus TiO₂ bestehenden Katalysator enthält, daß man aus dem Katalysatorbett ein behandeltes Gas abzieht, das Elementarschwefel enthält, dessen Gehalt an H₂S höchstens das 0,5-fache des H₂S-Gehalts im zu entschwefelnden Gas und dessen Gehalt an den Kohlenstoffverbindungen COS und CS₂ höchstens das 0,1-fache des Gehalts an diesen Kohlenstoffverbindungen im zu entschwefelnden Gas beträgt, daß man das behandelte Gas kühlt, Elementarschwefel auskondensiert und abtrennt, daß man das von auskondensiertem Elementarschwefel befreite Gas durch einen zweiten Reaktor leitet, in welchem man an einem Katalysator bei Temperaturen im Bereich von 110 bis 160°C H₂S und SO₂ zu Elementarschwefel umsetzt und den Elementarschwefel am Katalysator weitgehend adsorbiert.

2. Verfahren nach Anspruch 1, dadurch gekennzeichnet, daß der zu mindestens 80 Gew.-% aus TiO₂ bestehende Katalysator eine Imprägnierung von 0,3 bis 5 Gew.-% aufweist, die mindestens eines der Metalle Nickel, Eisen oder Kobalt enthält.

3. Verfahren nach Anspruch 1 oder 2, dadurch gekennzeichnet, daß man dem ersten Reaktor Sauerstoff zum teilweisen Umsetzen von H₂S zu SO₂ und/oder zu elementarem Schwefel zuführt.

## Claims

1. A process of desulphurizing a gas which contains H₂S, SO₂ and at least one of the carbon compounds COS and CS₂, wherein the total contents of COS and CS₂ amount to 0.01 to 0.5 times the H₂S content, by a hydrolysis of COS and CS₂ to form H₂S and CO₂ on a catalyst which contains at least 80% by weight TiO₂ and by the catalytic reaction of H₂S with SO₂ and/or O₂ form H₂O and elementary sulphur, characterized in that the gas to be desulphurized is passed in a first reactor at temperatures from 160 to 190°C through a catalyst bed, which contains only the catalyst that contains at least 80% by weight TiO₂, that a treated gas which contains elementary sulphur and contains H₂S in an amount not in excess of 0.5 time the H₂S content in the gas that is to be desulphurized and which contains the carbon compounds COS and CS₂ in an amount which is not in excess of 0.1 time the amount of said carbon compounds in the gas which is to be desulphurized, that the treated gas is cooled, elementary sulphur is condensed and separated, the gas from which condensed elementary sulphur has been removed is passed through a second reactor, in which H₂S and SO₂ are reacted to form elementary sulphur on a catalyst at temperatures in the range from 110 to 160°C, and the elementary sulfur is substantially adsorbed on the catalyst.

2. A process according to claim 1, characterized in that the catalyst which contains at least 80% by weight TiO₂ is provided with 0.3 to 5% by weight of an impregnating material that contains at least one of the metals nickel, iron or cobalt.

3. A process according to claim 1 or 2, characterized in that the first reactor is supplied with oxygen for partly reacting H₂S to form SO₂ and/or elementary sulphur.

## Revendications

1. Procédé de désulfuration d'un gaz, qui contient H₂S, SO₂ et au moins l'un des composés du carbone que sont COS et CS₂, la somme de la teneur en COS et en CS₂ représentant de 0,01 à 0,5 fois la teneur en H₂S, par hydrolyse de COS et de CS₂ en H₂S et en CO₂ sur un catalyseur constitué au moins pour 80 % en poids de TiO₂ et par transformation catalytique de H₂S par SO₂ et/ou O₂ en H₂O et en soufre élémentaire, caractérisé en ce qu'il consiste à envoyer le gaz à désulfurer dans un premier réacteur à des températures de 160 à 190°C dans un lit de catalyseur qui ne contient que le catalyseur constitué pour au moins 80 % en poids de TiO₂, à soutirer du lit de catalyseur un gaz traité, qui contient du soufre élémentaire, dont la teneur en H₂S représente au plus 0,5 fois la teneur en H₂S du gaz à désulfurer et dont la teneur en les composés du carbone que sont COS et CS₂ représente au plus 0,1 fois la teneur en ces composés du carbone du gaz à désulfurer, à refroidir le gaz traité, à condenser le soufre élémentaire et à le séparer, à envoyer le gaz débarrassé du soufre élémentaire séparé par condensation dans un deuxième réacteur, dans lequel on transforme, sur un catalyseur et à des températures comprises entre 110 et 160°C, H₂S et SO₂ en soufre élémentaire et l'on adsorbe dans une grande mesure le soufre élémentaire sur le catalyseur.

2. Procédé suivant la revendication 1, caractérisé en ce que le catalyseur constitué pour au moins 80 % en poids de TiO₂ comporte une imprégnation de 0,3 à 5 % en poids qui renferme au moins l'un des métaux que sont le nickel, le fer ou le cobalt.

3. Procédé suivant la revendication 1 ou 2, caractérisé en ce qu'il consiste à envoyer au premier réacteur de l'oxygène pour transformer partiellement H₂S en SO₂ et/ou en soufre élémentaire.
